# EUROPEAN PATENT APPLICATION

(11) **EP 4 717 067 A1**
(43) Date of publication of application: **01.04.2026**
(21) Application number: 25204193.4
(22) Date of filing: 24.09.2025
(51) Int. Cl.: A01D 34/82, B62D 51/00, B62D 51/04

(54) **WORKING MACHINE**

(30) Priority: 27.09.2024 JP 2024168200
(71) Applicant: Yamabiko Corporation, Ohme-shi, Tokyo 198-8760 (JP)
(72) Inventor: NAKANO, Kenji, Tokyo, 1988760 (JP)
(74) Representative: Winter, Brandl - Partnerschaft mbB

(57) **Abstract**

According to one aspect of the present invention, a working machine is provided, including a main body and an operation unit. The main body has at least one attachment portion and is configured to travel based on rotational power generated by a travel motor. The attachment portion includes a rotary body and is configured to be switchable between a first state and a second state by a predetermined operation, wherein the first state is a state in which the rotary body is allowed to rotate about its central axis, and the second state is a state in which rotation of the rotary body about the central axis is restricted. The operation unit is connected to the main body via the attachment portion and is configured to be graspable to assist the traveling of the main body.

## Description

### BACKGROUND

The present disclosure relates to a working machine.

### RELATED ART

JP2016-185134A discloses an unmanned work vehicle that facilitates manual movement operation in the event the unmanned work vehicle becomes unable to travel.

This unmanned work vehicle includes a traveling device driven by power from a prime mover, a switching device that switches a transmission state between the prime mover and the traveling device, and a control system having a control unit configured to control the operation of the switching device. The vehicle further includes a manual operation tool that is switchable to a use state enabling human-powered assistance for traveling, and a notification means for notifying the control system of the switching of the manual operation tool to the use state.

The control system includes an auxiliary control unit configured to control the operation of the switching device with priority over the control unit upon detecting the switching of the manual operation tool to the use state based on notification from the notification means.

### SUMMARY

However, the unmanned work vehicle disclosed in JP2016-185134A is a working machine that is premised on traveling by remote control, and the manual operation tool is intended to assist the working machine when stationary. Therefore, the vehicle was not designed in consideration of improving operability for a working machine during traveling through a travel-assist handle.

In view of the above circumstances, the present disclosure provides a working machine with improved operability through an operation unit.

### Means for Solving Problems

According to an aspect of the present disclosure, there is provided a working machine, including: a main body and an operation unit, wherein:
the main body includes at least one attachment portion and is configured to travel based on rotational power provided by a travel motor;
the attachment portion includes a rotary body and is configured to be switchable between a first state and a second state by a predetermined operation;
the first state is a state in which rotation of the rotary body about a central axis thereof is permitted, and the second state is a state in which rotation of the rotary body about the central axis is restricted;
and the operation unit is connected to the main body via the attachment portion and is configured to be gripped so as to assist the travel of the main body.

According to this aspect, operability of the working machine can be further improved.

### BRIEF DESCRIPTION OF DRAWINGS

FIG. 1 is a diagram showing an example of the overall configuration of a grass mower 11.
FIG. 2 is a perspective view showing the external appearance of the grass mower 11.
FIG. 3 is a front view showing the external appearance of the grass mower 11.
FIG. 4 is a left side view showing the external appearance of the grass mower 11.
FIG. 5 is a rear view showing the external appearance of the grass mower 11.
FIG. 6 is a top view showing the external appearance of the grass mower 11.
FIG. 7 is a bottom view showing the grass mower 11 with some components omitted.
FIG. 8 is a perspective view showing the grass mower 11 with some components omitted.
FIG. 9 is a top view showing the grass mower 11 with some components omitted.
FIG. 10 is a perspective view showing the grass mower 11 with some components omitted for explaining the configuration of the attachment portion 28.
FIG. 11 is an enlarged perspective view of the grass mower 11 showing an example of the switching operation at the switching portion 281.
FIG. 12 is a top view showing an example in which the rotary body 282 rotates about a central axis AX1.
FIG. 13 is an exploded perspective view showing an example of the configuration of the hinge structure 286.
FIG. 14 is an exploded top view showing an example of the configuration of the switching portion 281 and the rotary body 282.
FIG. 15 is an exploded top view showing an example of the configuration of the switching portion 281 and the rotary body 282.
FIG. 16 is an exploded perspective view showing a modified configuration of the hinge structure 286.
FIG. 17 is a top view showing the grass mower 11 with some components omitted for explaining a displaceable attachment portion 28.
FIG. 18 is a top view showing the grass mower 11 with some components omitted for explaining the grass mower 11 provided with a plurality of attachment portions 28.

### DETAILED DESCRIPTION

Hereinafter, an example of an embodiment of the present disclosure will be described with reference to the drawings. Various features described in the embodiment below can be combined with each other.

A program for implementing the software described in one embodiment may be provided as a non-transitory computer-readable medium, may be made available for download from an external server, or may be provided in such a manner that the program is executed on an external computer and its functions are realized on a client terminal (so-called cloud computing).

In various types of information processing according to one embodiment, an input and an output corresponding to the input can be realized. Here, if an output is obtained as a result of the input, the form of information referred to in such information processing (hereinafter referred to as reference information) is not limited. The reference information may be, for example, rule-based information such as a database, a lookup table, or a predetermined function (including decision formulas such as regression equations constructed using statistical methods), a pretrained model that has learned the correlations between inputs and outputs, or a large language model capable of outputting a desired result in response to a prompt.

In one embodiment, the term "unit" may include, for example, a combination of hardware resources implemented by circuitry in a broad sense and software information processing that can be specifically realized using those hardware resources. In addition, in one embodiment, various types of information are handled. This information can be represented, for example, by a physical value of a signal value indicating voltage or current, by a high or low level of a signal value as a set of binary bits composed of 0s and 1s, or by a quantum superposition (so-called qubits), and communication and computation can be performed on a circuit in a broad sense.

Further, the term "circuit in a broad sense" refers to a circuit realized by appropriately combining at least a circuit, circuitry, a processor, and memory. The processor may be a general-purpose processor or a dedicated circuit. That is, the term "circuit in a broad sense" may include application specific integrated circuits (ASICs), programmable logic devices (for example, simple programmable logic devices (SPLDs), complex programmable logic devices (CPLDs), field programmable gate arrays (FPGAs)), and the like.

### 1. Overall Configuration

In this section, a working machine 1 according to one embodiment will be described. The working machine 1 is configured to travel in order to perform a predetermined task. In the following, a case where the working machine 1 is the grass mower 11 will be described as an example.

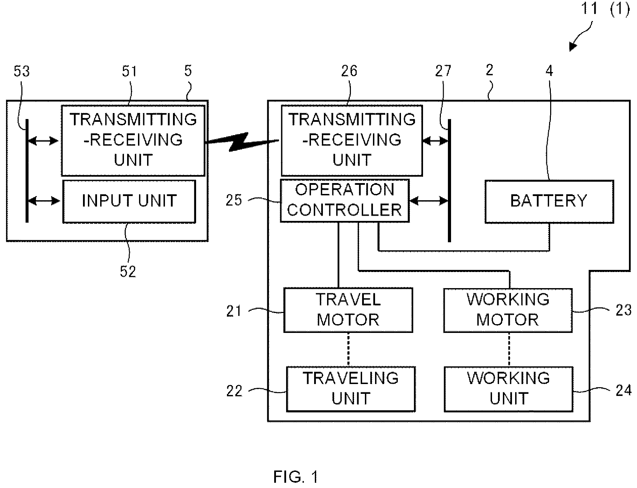

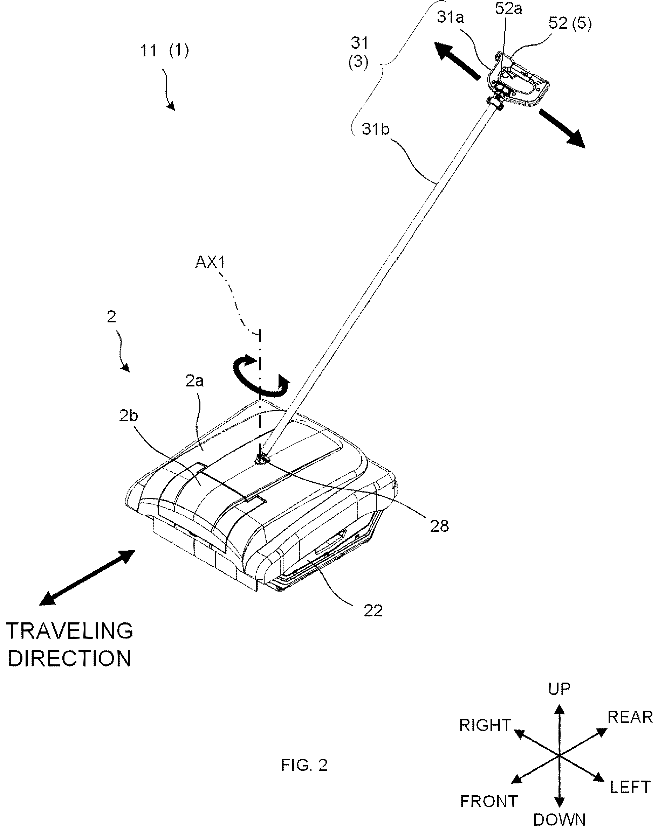

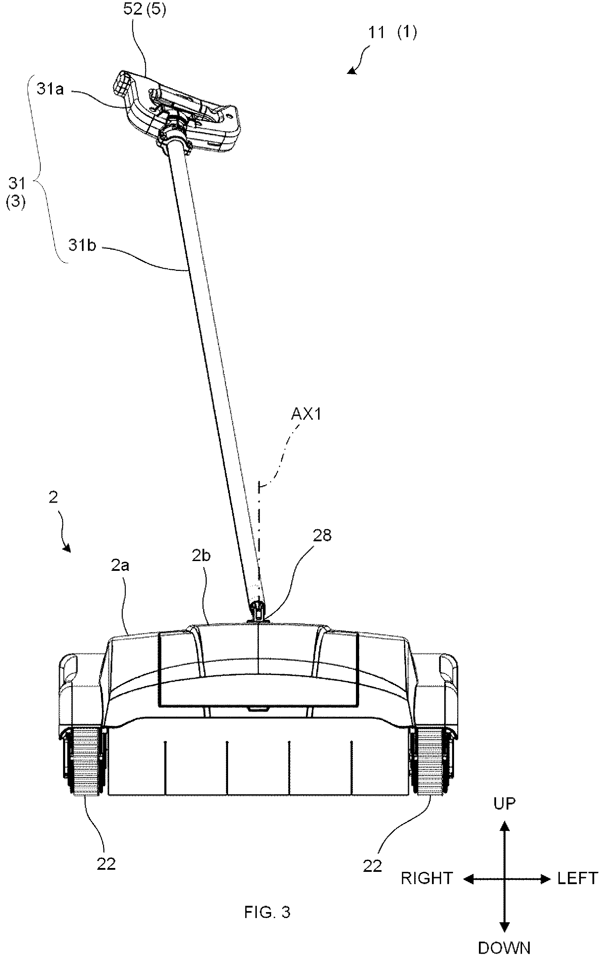

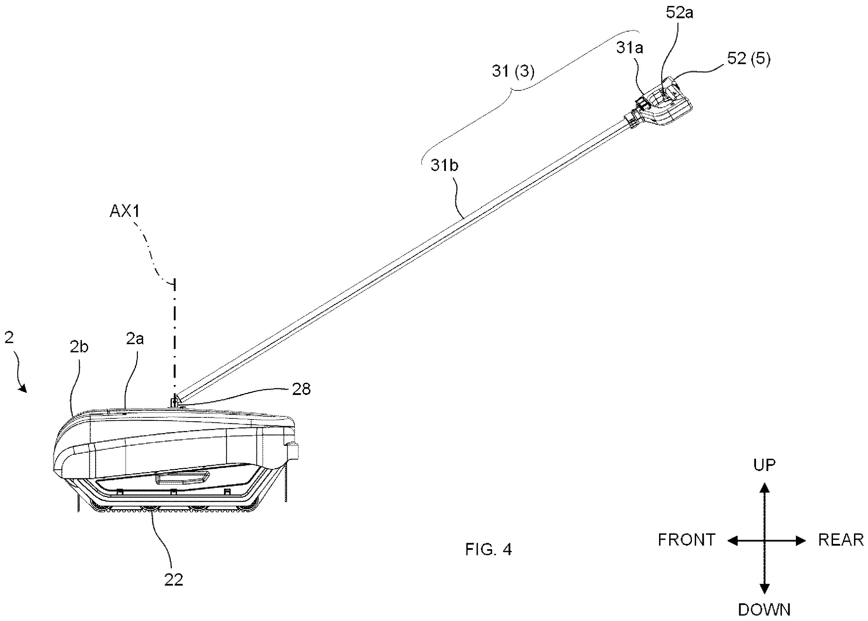

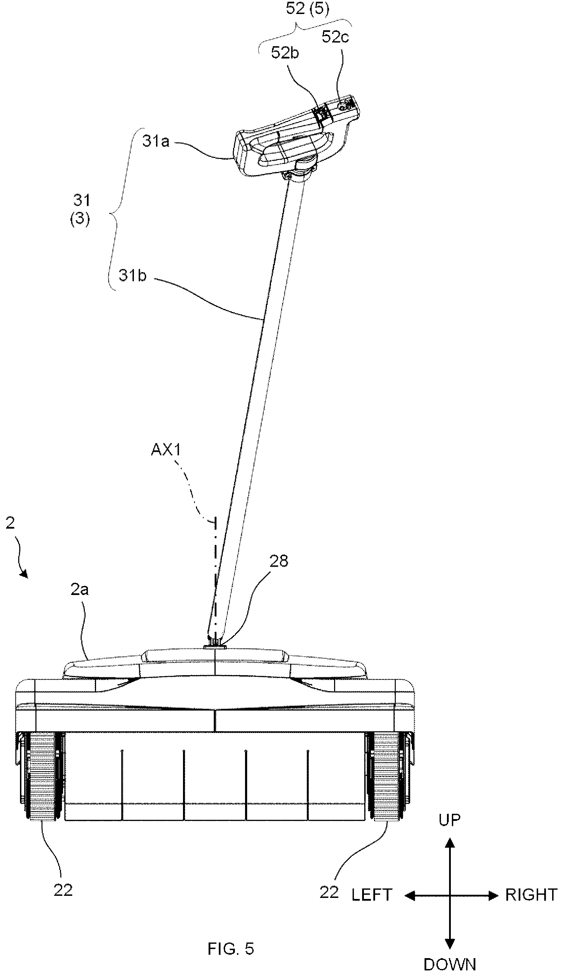

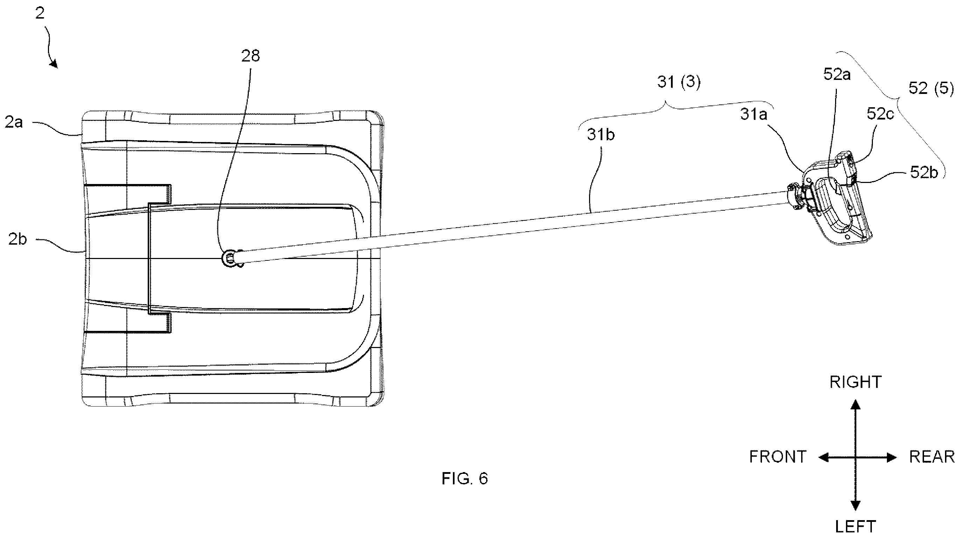

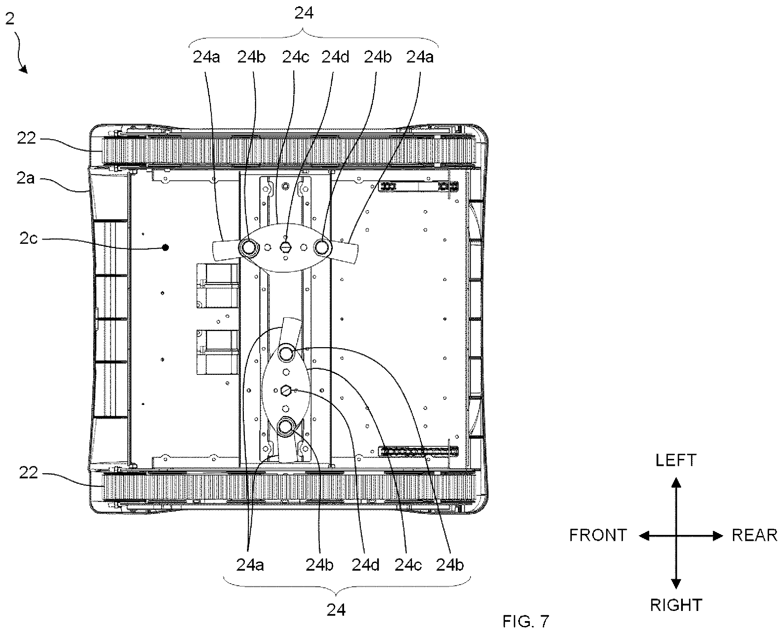

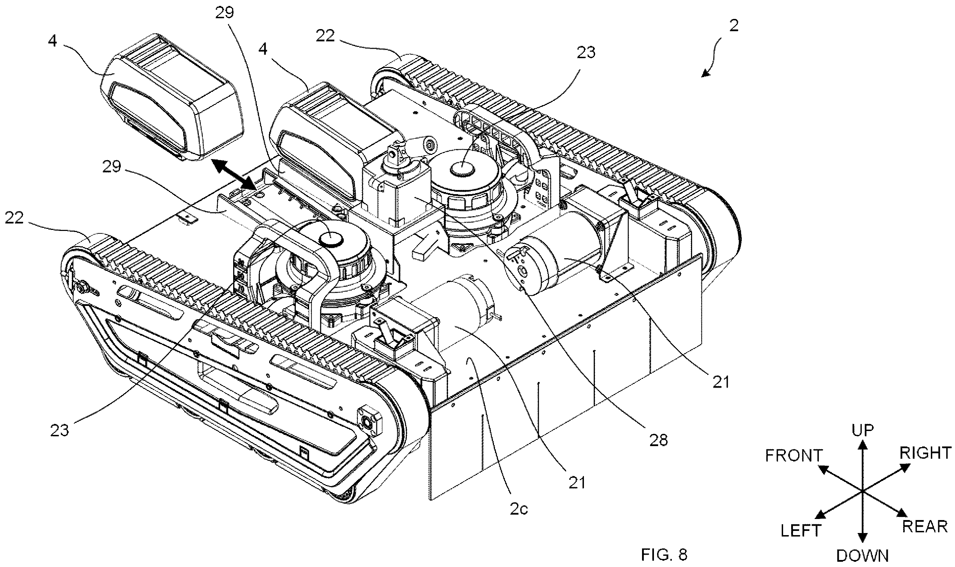

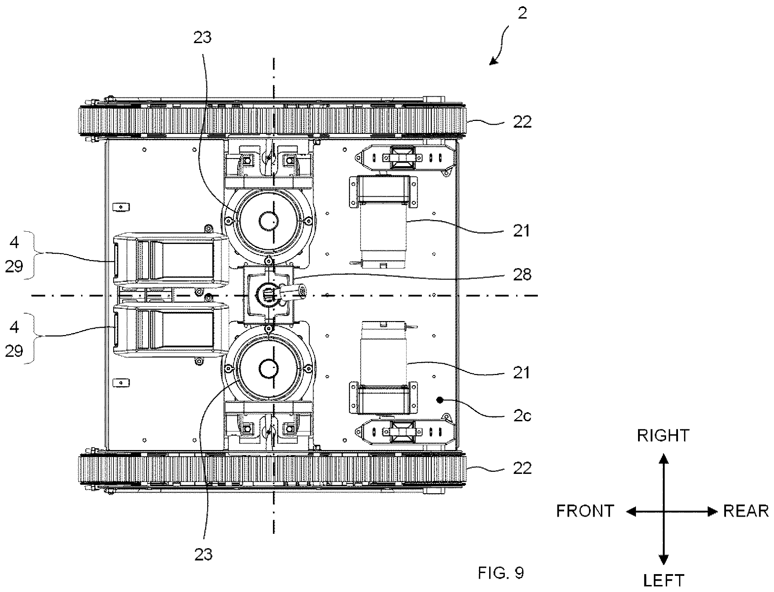

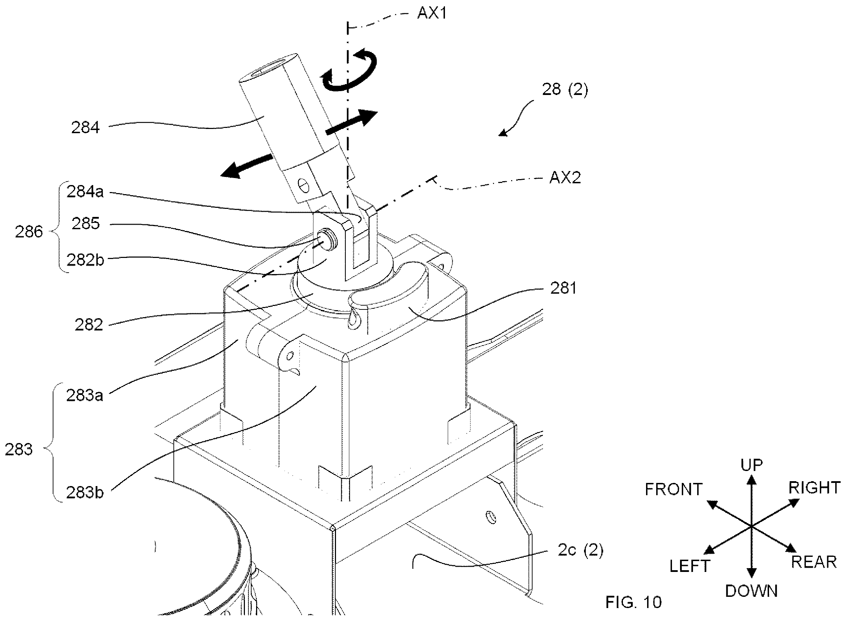

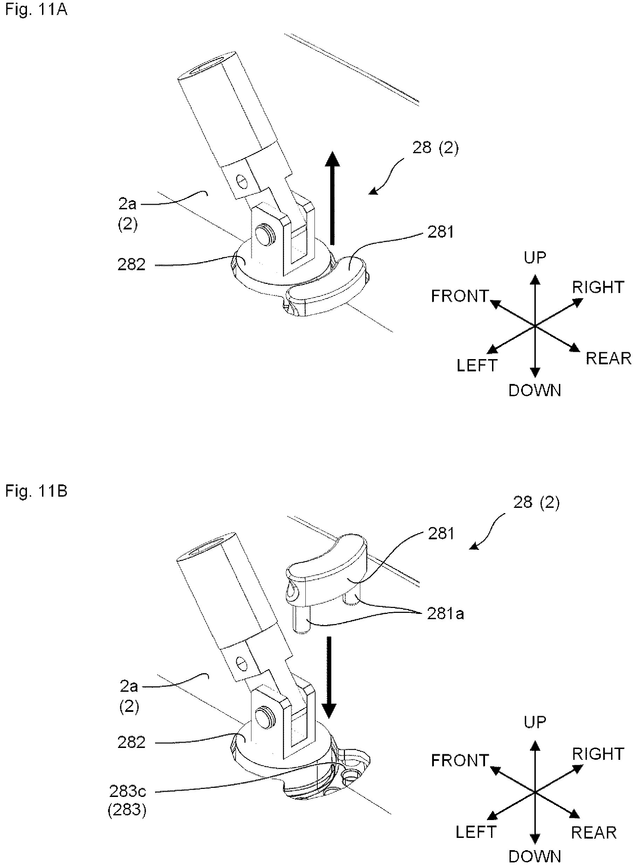

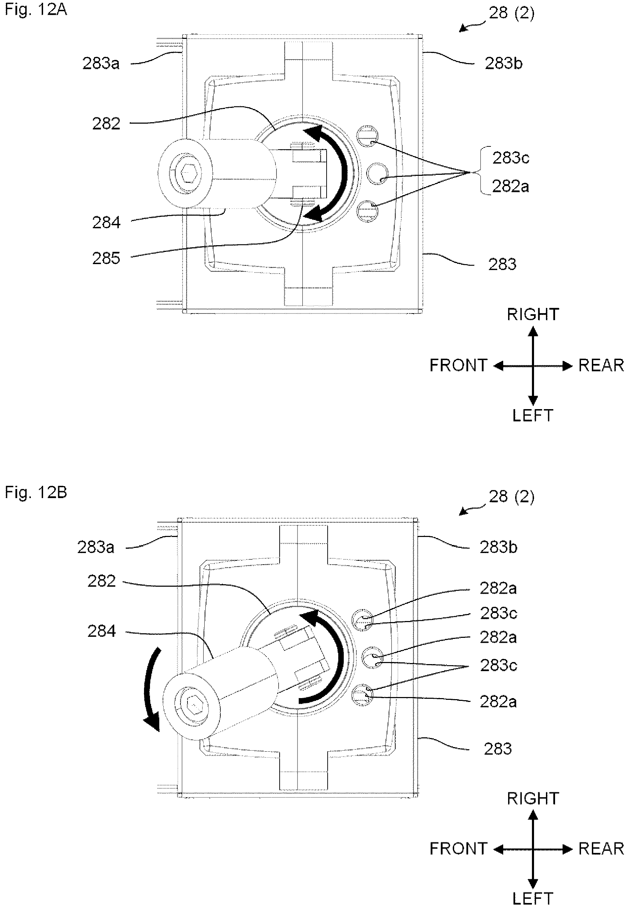

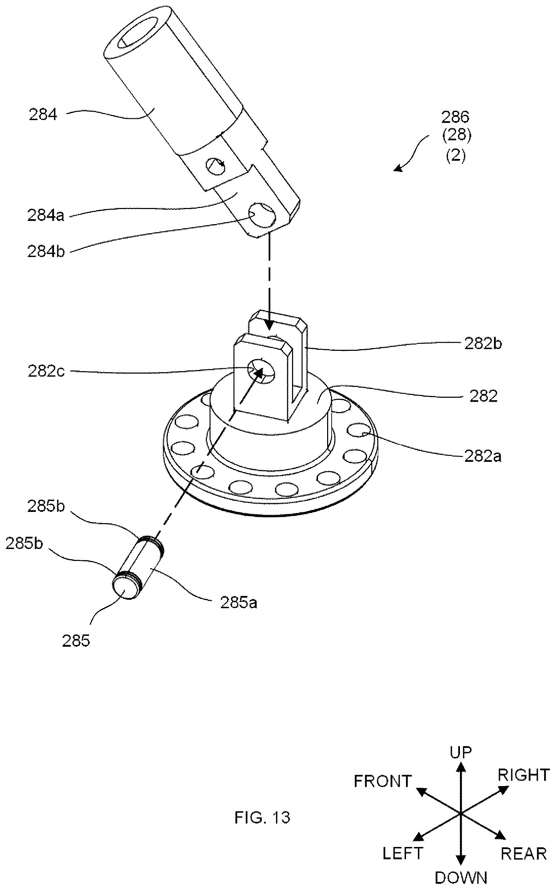

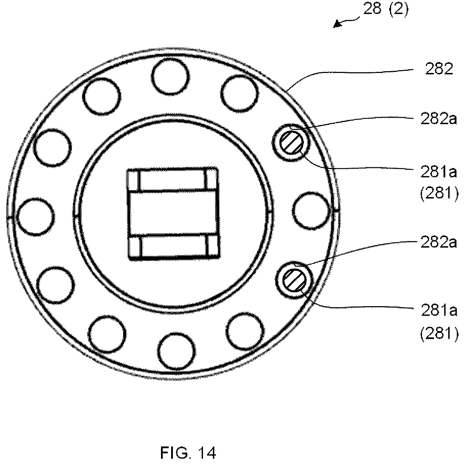

FIG. 1 is a diagram showing an example of the overall configuration of the grass mower 11. FIG. 2 is a perspective view showing the external appearance of the grass mower 11. FIG. 3 is a front view showing the external appearance of the grass mower 11. FIG. 4 is a left side view showing the external appearance of the grass mower 11. FIG. 5 is a rear view showing the external appearance of the grass mower 11. FIG. 6 is a top view showing the external appearance of the grass mower 11. FIG. 7 is a bottom view showing the grass mower 11 with some components omitted. FIG. 8 is a perspective view showing the grass mower 11 with some components omitted. FIG. 9 is a top view showing the grass mower 11 with some components omitted. FIG. 10 is a perspective view showing the grass mower 11 with some components omitted for explaining the configuration of the attachment portion 28. FIG. 11 is an enlarged perspective view of the grass mower 11 showing an example of the switching operation at the switching portion 281. FIG. 12 is a top view showing an example in which the rotary body 282 rotates about the central axis AX1. FIG. 13 is an exploded perspective view showing an example of the configuration of the hinge structure 286. FIG. 14 is an exploded top view showing an example of the configuration of the switching portion 281 and the rotary body 282.

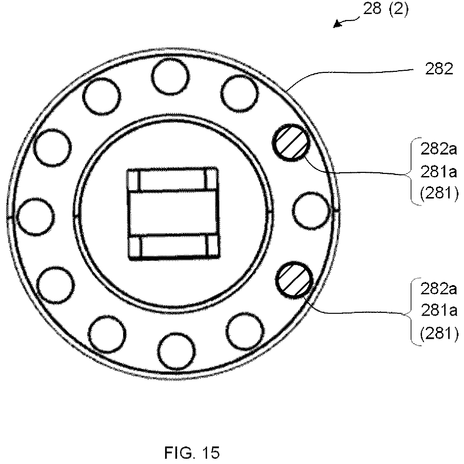

In the following description, directions of the grass mower 11 and components thereof are defined based on "up", "down", "left", "right", "front", and "rear" shown in FIGs. 2 to 14 (the same applies to FIGs. 15 to 18). Further, in the following description, "up" is also referred to as "upper" or "upward," and "down" as "lower" or "downward." The direction is referred to as the "up-down" or "vertical direction."
The same applies to "left," "right," "front," and "rear."

### (Grass Mower 11)

As shown in FIGs. 1 and 2, the grass mower 11, which is the working machine 1, includes a main body 2, an operation unit 3, a battery 4, and a remote control 5. The grass mower 11 has a traveling function and a working function, and performs mowing work while traveling.

### (Main Body 2)

As shown in FIGs. 1 and 8, the main body 2 includes travel motors 21, traveling units 22, working motors 23, a working unit 24, an operation controller 25, a transmitting-receiving unit 26, a communication bus 27, an attachment portion 28, and a mounting portion 29. That is, the main body 2 includes at least one attachment portion 28.

As shown in FIGs. 2 and 8, the main body 2 has an upper cover 2a and a lower support plate 2c. As shown in FIGs. 2 to 6, the upper cover 2a has a lid-like shape and is configured to cover the components constituting the main body 2 from above. These components are mounted on the lower support plate 2c. As shown in FIGs. 2 and 6, the upper cover 2a includes an opening/closing portion 2b capable of being opened and closed. By opening the opening/closing portion 2b, an operator can confirm or operate the components of the main body 2 covered by the upper cover 2a. That is, the opening/ closing portion 2b allows the operator to confirm or operate these components without removing the upper cover 2a from the grass mower 11. The lower support plate 2c is plate-shaped and is disposed below the upper cover 2a. The travel motor 21, the traveling unit 22, the working motor 23, the working unit 24, the operation controller 25, the transmitting-receiving unit 26, the communication bus 27, the attachment portion 28, and the mounting portion 29 are components of the main body 2 and are mechanically connected to the lower support plate 2c. Among these, the attachment portion 28 is provided to protrude from the upper cover 2a. Details of the attachment portion 28 are described in the section of the operation unit 3.

The travel motor 21 is an electric motor and is configured to generate rotational power for causing travel of the main body 2. Specifically, as shown in FIG. 8, in the grass mower 11, a total of two travel motors 21 are disposed, one on each of the left and right sides, at a rear portion of an upper surface of the lower support plate 2c. Each travel motor 21 is mechanically connected to the traveling unit 22 either directly or via chains, gears, or the like (not shown). The traveling unit 22 receives rotational power from the travel motors 21 to drive the grass mower 11. In other words, the main body 2 is configured to travel based on rotational power from the travel motor 21. As shown in FIGs. 3 to 5, the traveling unit 22 in the grass mower 11 is an endless track, which is also called a "caterpillar" (registered trademark). The traveling unit 22 is not limited to the endless track and may instead use tires or the like.

Each working motor 23 is an electric motor and is configured to generate rotational power for performing a mowing operation. Specifically, as shown in FIG. 8, in the grass mower 11, a total of two working motors 23 are disposed, one on each of the left and right sides, substantially at a center in the front-rear direction on the upper surface of the lower support plate 2c. Each working motor 23 is mechanically connected to its corresponding working unit 24 either directly or via chains, gears, or the like (not shown). The working unit 24 receives rotational power from the working motors 23 to perform predetermined operation. As shown in FIG. 7, the working unit 24 in the grass mower 11 is configured to rotate with rotational power from the working motors 23 to mow grass or the like. Specifically, the working unit 24 is of a free knife type including cutting blades 24a, cutting blade shafts 24b, a cutting blade attachment portion 24c, and a rotary shaft 24d. The cutting blade 24a is plate-shaped and configured to rotate about the rotary shaft 24d via the cutting blade attachment portion 24c while the grass mower 11 travels, cutting grass or the like that comes into contact with the cutting blade 24a. The cutting blade attachment portion 24c has an elliptical shape with the rotary shaft 24d connected substantially at a center, and rotates in a plane defined by the front-rear and left-right directions. The cutting blade attachment portion 24c is provided with the cutting blade shaft 24b at both longitudinal ends. The cutting blade 24a is connected to both the upper and lower sides of each cutting blade shaft 24b. In addition, the cutting blade 24a is mounted to the cutting blade shaft 24b of the cutting blade attachment portion 24c, allowing rotation within a predetermined range around the cutting blade shaft 24b. The working unit 24 is not limited to the free knife type, and may be adopted other forms, such as, a bar knife type, a cross knife type, or a hammer knife type. Further, a resin cord such as a nylon cord, a metal blade (such as a reel blade, a chip saw, or a shredder blade), a resin blade, or a reciprocating blade may also be adopted.

As shown in FIG. 1, the energization of the travel motor 21 and the working motor 23 from the battery 4 is controlled by the operation controller 25. That is, the operation controller 25 is electrically connected to the travel motor 21, the working motor 23, and the battery 4 via wiring, connectors, and the like, and controls energization from the battery 4 to the travel motor 21 and the working motor 23. Accordingly, the operation controller 25 is configured to electrically control the rotation of the travel motors 21 and the working motors 23. The operation controller 25 and the transmitting-receiving unit 26 are electrically connected via the communication bus 27. The transmitting-receiving unit 26 has a wireless communication function and performs wireless communication with the remote control 5. Details of the battery 4 and the remote control 5 will be described later.

As shown in FIGs. 8 and 9, the attachment portion 28 has a box-shaped configuration and is disposed substantially at the center of the upper surface of the lower support plate 2c. As shown in FIG. 10, the attachment portion 28 includes a switching portion 281, a rotary body 282, a case 283, a fixing portion of a control rod 284, and a hinge structure 286.

As shown in FIG. 11, the switching portion 281 includes a shaft portion 281a. As shown in FIGs. 11 and 12, the shaft portion 281a is configured to be insertable into a positioning through hole 282a via a case through hole 283c. The case through hole 283c is a through hole provided in the case 283, and the positioning through hole 282a is a through hole provided in the rotary body 282. The switching portion 281 is configured to be removable from the attachment portion 28 by being moved upward from a state in which the switching portion 281 is attached to the case 283.,

As shown in FIG. 13, the rotary body 282 includes a plurality of positioning through holes 282a and a bearing 282b. The positioning through holes 282a are arranged at equal intervals in the circumferential direction on a disk-shaped region located on the lower side of the rotary body 282. Specifically, twelve positioning through holes 282a are disposed at equal angular intervals. The bearing 282b includes two plate pieces that protrude upward from the central upper portion of the rotary body 282. Accordingly, a groove is formed between the two plate pieces. Each plate piece includes a bearing through hole 282c.

As shown in FIG. 10, the case 283 includes a front case 283a and a rear case 283b. The case 283 accommodates the rotary body 282 in a manner allowing the rotary body 282 to rotate about a vertical axis, namely the central axis AX1. As shown in FIG. 12, a through hole in the case through hole 283c is provided in the rear case 283b.

As shown in FIG. 11, the attachment portion 28 is configured to be switchable between a first state S1 and a second state S2 by a predetermined operation in which the switching portion 281 is attached to or detached from the rotary body 282 and the case 283. In this case, the first state S1 is a state in which the rotary body 282 is permitted to rotate about the central axis AX1. The second state S2 is a state in which the rotation of the rotary body 282 about the central axis AX1 is restricted.

Specifically, as shown in FIGs. 11B and 12, when the switching portion 281 is removed from the attachment portion 28, the rotary body 282 is in a rotatable state with respect to the case 283. That is, the state of the attachment portion 28 is a state in which the rotation of the rotary body 282 about the central axis AX1 is permitted, namely, the first state S1.

As shown in FIG. 12, the positioning through holes 282a in the rotary body 282 move with respect to the case through hole 283c in the case 283 as the rotary body 282 rotates. Accordingly, the rotary body 282 and the case 283 are configured such that the positioning through hole 282a and the case through hole 283c are aligned with each other at a predetermined position. Specifically, the rotary body 282 and the case 283 are configured such that the positioning through hole 282a and the case through hole 283c are aligned with each other at positions spaced at 30° intervals in terms of a rotational angle about the central axis AX1, based on twelve positioning through holes 282a. The rotational angle may be configured to be, for example, 5° to 60°, preferably 10° to 45°, and more preferably 15° to 30°. Specifically, for example, the rotational angle may be 5°, 10°, 15°, 20°, 25°, 30°, 35°, 40°, 45°, 50°, 55°, or 60°, and may be within a range between any two of the values exemplified herein.

When the positioning through hole 282a in the rotary body 282 and the case through hole 283c in the case 283 are aligned, the switching portion 281 can be mounted to the attachment portion 28. When the switching portion 281 is attached to the attachment portion 28, the attachment portion 28 is in a state in which the rotation of the rotary body 282 with respect to the case 283 is restricted. That is, the state of the attachment portion 28 is a state in which the rotation of the rotary body 282 about the central axis AX1 is restricted, namely, the second state S2. Specifically, the movement of the rotary body 282 with respect to the case 283 is restricted by the shaft portion 281a of the switching portion 281 being inserted into the positioning through hole 282a of the rotary body 282 via the case through hole 283c of the case 283.

According to this aspect, it is possible to switch between the first state S1, in which the operation unit 3 is rotatable about the central axis AX1 with respect to the main body 2, and the second state S2, in which such rotation is restricted. That is, switching between the first state S1 and the second state S2 can be appropriately performed depending on the working conditions, thereby enabling the device to be operated via the operation unit 3. In the first state S1, the operator can rotate the grass mower 11 through 360 degrees in front-rear and left-right directions without changing the position of the operation unit 3 while gripping the operation unit 3. Accordingly, an on-the-spot turn (ultra-pivot turn) and travel assistance with a high degree of freedom in traveling direction can be realized. In the second state S2, the operator can also adjust the position of the operation unit 3 as desired, thereby facilitating in travel control by maintaining a constant angle between the operator and the grass mower 11. Thus, by adjusting the state of the operation unit 3, the operability of the grass mower 11 can be further improved.

The attachment portion 28 is configured to switch between the first state S1 and the second state S2 by attaching or detaching the switching portion 281 as a switching operation. In other words, the switching portion 281 is configured to switch between the first state S1 and the second state S2 in response to the switching operation thereof. According to this aspect, switching between the first state S1 and the second state S2 can be easily performed by operating the switching portion 281. The switching portion 281 may also be configured to switch between the first state S1 and the second state S2 in response to the switching operation via an electric signal. Specifically, the switching portion 281 may include an actuator (such as an electric motor or an electromagnetic solenoid) that operates in response to control by the operation controller 25. The switching portion 281 permits or restricts rotational movement of the rotary body 282 with respect to the case 283 by means of an actuator that operates in response to control by the operation controller 25. According to this aspect, operation of the switching portion 281 can be further facilitated. For example, the actuator can be operated by an input from the remote control 5 operated by the operator. Details of the remote control 5 will be described later.

As shown in FIG. 9, the attachment portion 28 is disposed substantially at the center of the main body 2 in a plan view, namely, on a plane defined by the front-rear and left-right directions. That is, the central axis AX1 of the attachment portion 28 is positioned such that the central axis thereof is oriented along a vertical direction of the main body 2, thereby disposing the attachment portion 28 substantially at the center of the main body 2 in a horizontal surface orthogonal to the vertical direction. According to this aspect, compared to cases where the attachment portion 28 is disposed at an end of the main body 2 in the horizontal plane, a more compact ultra-pivot turn can be achieved. Specifically, the grass mower 11 can turn with a smaller rotation radius without spreading outward during rotation, thereby shortening the longest distance from the central axis to the tip of the main body 2 in the horizontal plane. As a result, even while gripping the operation unit 3, the operator can operate the grass mower 11 safely without contacting with the grass mower 11.. Therefore, operation during the ultra-pivot turn in place can be facilitated.

In the second state S2, the attachment portion 28 is preferably in a state in which rotation of the rotary body 282 about the central axis AX1 is restricted within a predetermined angular range. In other words, the second state S2 is preferably a state in which rotation of the rotary body 282 is fixed in position with a predetermined amount of rotational play. The predetermined angle in this case is, for example, 1° to 15°, preferably 2° to 10°, and more preferably 3° to 7°. Specifically, the predetermined angle may be 1°, 2°, 3°, 4°, 5°, 6°, 7°, 8°, 9°, 10°, 11°, 12°, 13°, 14°, or 15°, or within any range between any two of these values. The attachment portion 28 may be configured to form a predetermined gap among the switching portion 281, the rotary body 282, and the case 283, so that rotation is restricted within the predetermined angular range. Specifically, the predetermined gap may be formed based on the magnitude relationship among the shaft diameter of the shaft portion 281a of the switching portion 281, the diameter of the positioning through hole 282a of the rotary body 282, and the diameter of the case through hole 283c of the case 283. The predetermined gap may be formed by making at least one of the positioning through hole 282a of the rotary body 282 and the case through hole 283c of the case 283 into a substantially oval form, with respect to the shaft portion 281a of the switching portion 281, which is formed in a circular shape. Specifically, as shown in FIG. 14, it is preferable that the shaft diameter of the shaft portion 281a of the switching portion 281 be smaller than the diameter of the positioning through hole 282a of the rotary body 282 so that the predetermined gap is present. According to this aspect, since rotation of the rotary body 282 is allowed to rotate within a predetermined angular range, unnecessary input transmitted from the main body 2 to the operation unit 3 can be mitigated. For example, it becomes possible to alleviate input to the operation unit 3 caused by swaying of working machine 1 when the working machine 1 travels over rough terrain. As a result, the operability in the second state S2 can be further improved.

As shown in FIG. 10, the fixing portion of the control rod 284 has a cylindrical shape and is provided above the attachment portion 28, being configured to allow the operation unit 3 to be attached and detached. That is, the attachment portion 28 is configured to detachably connect the operation unit 3 . According to this aspect, it becomes possible to attach or detach the operation unit 3 depending on the work situation. The operation unit 3 having a length and shape suitable for the work can be selected and attached to the main body
Further, depending on the work, it becomes possible to perform the work with the operation unit 3 detached. For example, when working on rough terrain, slopes, or near water, the operator can assist the travel of the grass mower 11 by attaching the operation unit 3. On the other hand, in narrow or obstacle-dense areas where it is difficult for a person to enter, removing the operation unit 3 makes it possible to avoid the operation unit 3 becoming an obstacle during work. As a result, work can be performed more easily with improved operability.

As shown in FIG. 13, the fixing portion of the control rod 284 includes a bearing 284a on its lower side. The bearing 284a is formed in a plate shape and is rotatably attached to the bearing 282b of the rotary body 282 via the insertion bolt 285. The bearing 282b of the rotary body 282, the bearing 284a of the fixing portion of the control rod 284, and the insertion bolt 285 together form the hinge structure 286. The insertion bolt 285 includes screw shafts 285b at both ends of the shaft, and a shaft portion 285a positioned between screw shafts 285b. The shaft portion 285a is inserted through the bearing through hole 282c provided in the rotary body 282 and a bearing through hole 284b provided in the fixing portion of the control rod 284, and a nut (not shown) is screwed onto the screw shafts 285b protruding from the bearing 282b.

As shown in FIG. 10, the hinge structure 286 has a predetermined axis AX2 in a direction perpendicular to the central axis AX1, which is the vertical axis. The predetermined axis AX2 is an axis positioned in either direction within the plane defined by the front-rear and left-right directions, depending on the rotation about the central axis AX1. Specifically, the predetermined axis AX2 shown in FIG. 10 is positioned substantially in the left-right direction. The rotary body 282 and the fixing portion of control rod 284 are configured to be displaceable relative to each other about the predetermined axis AX2. That is, the attachment portion 28 and the operation unit 3 are connected each other via the hinge structure 286 and configured to rotate about the predetermined axis AX2. Specifically, as shown in FIG. 10, the fixing portion of control rod 284 rotates about the predetermined axis AX2, allowing the operation unit 3 connected to the fixing portion of control rod 284 to move forward or backward. According to this aspect, the hinge structure 286 expands the movable range of the operation unit 3, enabling an improved degree of freedom in the operation position of the grass mower 11. Specifically, not only is rotation on the horizontal plane enabled by the rotary body 282, but rotation on the vertical plane also enabled by the hinge structure 286, so that the operation unit 3 can be displaced in three dimensions.

As shown in FIG. 8, the mounting portion 29 is plate-shaped and configured so that the battery 4 for supplying electric power to the travel motors 21 can be attached and detached. The mounting portion 29 is disposed substantially near the center in the left-right direction at the front portion of the upper surface of the lower support plate 2c. The mounting portion 29 is inclined such that it approach the lower support plate 2c from the front toward the rear. Details of the battery 4 will be described later.

### (Operation Unit 3)

The main body 2 is configured to be connected to the operation unit 3 via the attachment portion 28. The operation unit 3 is connected to the attachment portion 28 and is configured to be operable to assist the travel of the main body 2. As shown in FIG. 2, the operation unit 3 is specifically the operation rod 31. According to this aspect, the operator can directly control the main body 2 using the operation rod 31. In addition, the operation rod 31 includes a gripping portion 31a and a connecting portion 31b.

The gripping portion 31a forms a circular ring when integrated with the remote control 5, and is gripped by the operator when their hand is inserted into the inner side of the circular ring. As shown in FIG. 2, the connecting portion 31b is connected below the gripping portion 31a. The connecting portion 31b is pipe-shaped and connects the attachment portion 28 and the gripping portion 31a. That is, the operation unit 3 is connected to the main body 2 via the attachment portion 28 (the rotary body 282) and is configured to be gripped so as to assist the travel of the main body 2. The connecting portion 31b shown in FIG. 2 has a fixed length and is non-telescopic, but is not limited thereto and, for example, may include a telescopic mechanism. According to this aspect, even when an appropriate sense of distance varies depending on the height of the operator, adjustment of the length of the operation unit 3 enables each operator to perform work in a comfortable posture. Details of the remote control 5 will be described later.

### (Battery 4)

As shown in FIG. 8, the battery 4 is detachably attached to the mounting portion 29 at the front portion of the main body 2. The battery 4 is constructed by housing a secondary battery, such as a lithium-ion rechargeable battery inside a rectangular case. The battery 4 is a battery pack that can be attached and detached relative to the mounting portion 29 by sliding it in the front-rear direction. In the grass mower 11, two batteries 4 are mounted; however, the mower is not limited to this configuration and may instead include one mounting portion 29 or three or more mounting portions 29, with batteries 4 mounted on these mounting portions 29.

### (Remote Control 5)

As shown in FIG. 1, the remote control 5 includes a transmitting-receiving unit 51 and an input unit 52. The transmitting-receiving unit 51 and the input unit 52 are electrically connected via a communication bus 53. As shown in FIG. 2, the remote control 5 is integrally configured with the gripping portion 31a of the operation unit 3. The remote control 5 is a controller having wireless communication functionality and is configured to control the grass mower 11 based on operations by the user. The remote control 5 may be configured to be detachable from the gripping portion 31a of the operation unit 3.

The transmitting-receiving unit 51 of the remote control 5 transmits signals generated by the input unit 52 to the transmitting-receiving unit 26 of the main body 2 via wireless communication. That is, the transmitting-receiving unit 26 receives the signals generated by the input unit 52 from the transmitting-receiving unit 51 via wireless communication. The operation controller 25 executes control in response to the signal received by the transmitting-receiving unit 26.

As shown in FIG. 6, the input unit 52 includes a travel input lever 52a, a direction input lever 52b, and a cutting blade input lever 52c. The travel input lever 52a is an operation means for increasing or decreasing the traveling speed of the main body 2. The travel input lever 52a is configured to control the traveling speed of the main body 2 via a drive switch (not shown). The direction input lever 52b is an operation means for controlling the traveling direction of the main body 2. Further, the cutting blade input lever 52c is an operation means for switching the rotation of the working unit 24 on and off.

### [Other Embodiments]

The working machine 1 according to one embodiment can also be implemented in the following manners.

In the above embodiment, the working machine 1 has been described taking the grass mower 11 as an example; however, the present disclosure is not limited thereto. For example, the working machine 1 may be a collection machine (not shown) that collects litter, golf balls, or the like scattered on the ground, or a spreader (not shown). According to this aspect, the collection machine or the sprinkler with improved operability can perform predetermined tasks corresponding to the respective machine type.

FIG. 15 is an exploded top view showing an example of the configuration of the switching portion 281 and the rotary body 282.

In the above embodiment, the case where, in the second state S2, rotation about the central axis AX1 is restricted within a predetermined angle range has been described as an example; however, the present disclosure is not limited thereto. For example, the second state S2 may be a state in which the rotation of the rotary body 282 is prevented. Specifically, as shown in FIG. 15, it is preferable that the dimensional relationship between the shaft diameter of the shaft portion 281a of the switching portion 281 and the diameter of the positioning through hole 282a of the rotary body 282 allows the shaft portion 281a of the switching portion 281 to be insertable and removable from the positioning through hole 282a, and also allows prevention of rotation of the rotary body 282. According to this aspect, since rotation of the rotary body 282 is prevented, operation of the main body 2 via the operation unit 3 can be performed without delay. As a result, the operability in the second state S2 can be further improved.

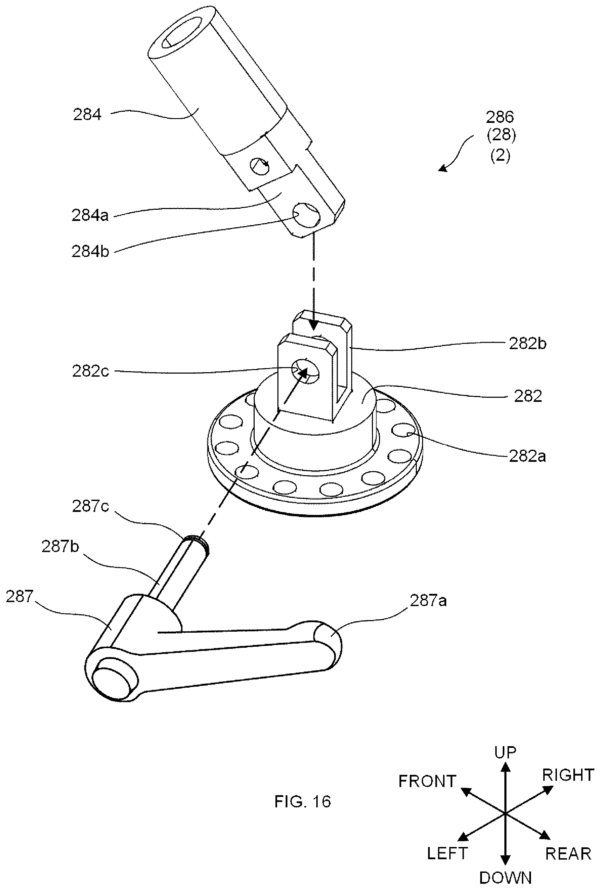

FIG. 16 is an exploded perspective view showing a modified example of the configuration of the hinge structure 286.

In the embodiment shown in FIG. 13, the example in which an insertion bolt 285 is used for the hinge structure 286 has been described; however, the present disclosure is not limited thereto. For example, as shown in FIG. 16, a hinge switching portion 287 may be adopted for the hinge structure 286. In this case, the attachment portion 28 includes the hinge switching portion 287. The hinge switching portion 287 includes a shaft portion 287b and a screw shaft 287c, similar to the insertion bolt 285. The hinge switching portion 287 is inserted through the bearing through hole 282c of the rotary body 282 and the bearing through hole 284b of the fixing portion of control rod 284, and a nut (not shown) or the like is screwed onto the screw shaft 287c protruding from the bearing 282b. Further, the hinge switching portion 287 includes a lever section 287a and is configured to restrict relative displacement between the rotary body 282 and the fixing portion of control rod 284 by rotating the lever section 287a to tighten the engagement between the screw shaft 287c and the nut. With this configuration, the hinge structure 286 is configured to switch between a third state S3 and a fourth state S4 by operating the hinge switching portion 287. In this case, the third state S3 is a state in which the attachment portion 28 and the operation portion 3 are permitted to rotate about the predetermined axis AX2. The fourth state S4 is a state in which rotation of the attachment portion 28 and the operation portion 3 about the predetermined axis AX2 is restricted. According to this aspect, operability of the working machine 1 can be further improved by selecting the fixing state of the operation unit 3 suitable for the working situation. In other words, the attachment portion 28 is configured to switch between the third state S3 and the fourth state S4 by rotating the hinge switching portion 287 as a switching operation. In other words, the hinge switching portion 287 is configured to switch between the third state S3 and the fourth state S4 in response to a switching operation thereof. According to this aspect, switching between the third state S3 and the fourth state S4 can be easily performed by operating the hinge switching portion 287.

Further, the switching portion 281 and the hinge switching portion 287 may be configured to operate in conjunction with each other. Specifically, it is preferable that the attachment portion 28 is configured to be in the second state S2, and the hinge switching portion 287 is configured to be in the fourth state S4. According to this aspect, the states of the switching portion 281 and the hinge switching portion 287 is switchable in conjunction with each other. As a result, the operation state is switchable more smoothly.

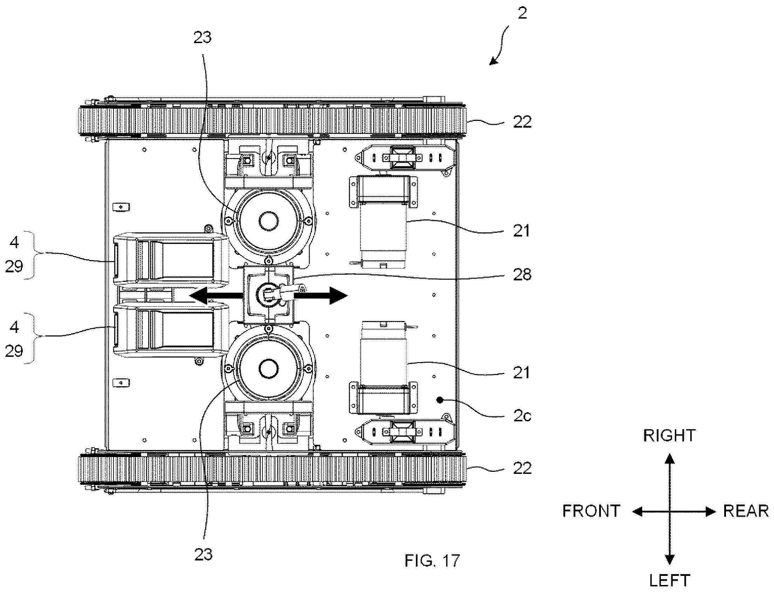

FIG. 17 is a top view showing the grass mower 11 with some components omitted for explaining a displaceable attachment portion 28.

In the above embodiment, the example has been described in which the attachment portion 28 is disposed substantially at a center of a plane defined by the front-rear and left-right directions of the main body 2; however, the present disclosure is not limited thereto. For example, the attachment portion 28 may be provided so as to be displaceable along the traveling direction of the main body 2. Specifically, as shown in FIG. 17, the attachment portion 28 may be provided so as to be displaceable in the front-rear direction. According to this aspect, by offsetting the attachment portion 28 depending on the working situation, work can be performed in a state where operability is further improved.
For example, by positioning the attachment portion 28 at an one end of the main body 2, it becomes possible to facilitate work involving lifting one end, such as pushing up or pulling up the grass mower 11 on a steep slope.

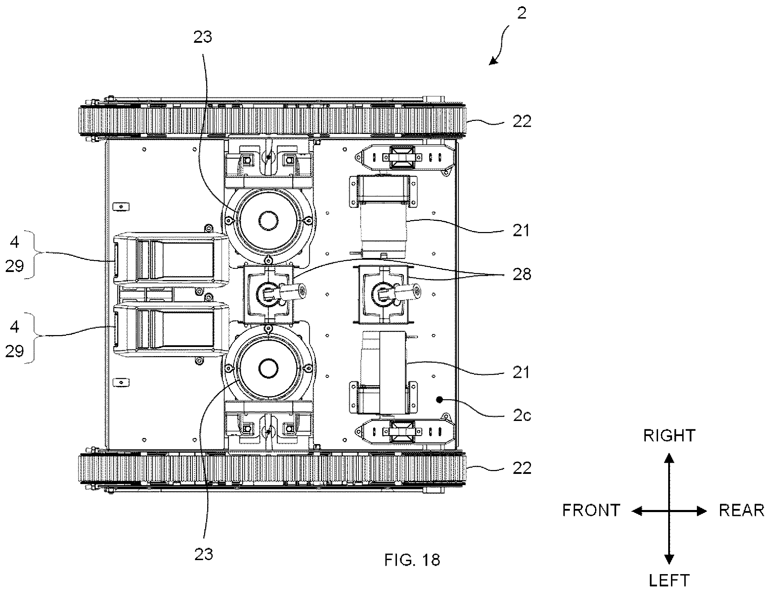

FIG. 18 is a top view showing the grass mower 11 with some components omitted for explaining the grass mower 11 provided with a plurality of attachment portions 28.

In the above embodiment, an example has been described in which one attachment portion 28 is disposed on the main body 2; however, the present disclosure is not limited thereto. For example, the at least one of the attachment portion(s) 28 may include a plurality of the attachment portions 28, and the plurality of the attachment portions 28 may be disposed spaced apart from each other along a traveling direction of the main body 2. As shown in FIG. 18, the attachment portion 28 is preferably disposed substantially at the center and at the rear along the front-rear direction, which is the traveling direction of the main body 2. According to this aspect, it becomes possible to select the attachment portion 28 to which the operation unit 3 is to be connected from among the plurality of attachment portions 28 depending on the work situation. As a result, work can be performed in a state where operability is further improved.

In the above embodiment, an example has been described in which the operation controller 25 controls the main body 2 via wireless communication with the remote control 5, but the present disclosure is not limited thereto. For example, the remote control 5 and the operation controller 25 may be electrically connected via a wired connection.

In the above embodiment, an example has been described in which the rotary body 282 and the case 283 are configured such that, based on twelve positioning through holes 282a, the positioning through holes 282a are aligned with the case through hole 283c every 30° of rotation angle around the central axis AX1. However, the present disclosure is not limited thereto. For example, the rotation angle about the central axis AX1 may be configured to be steplessly adjustable.

Further, the working machine may also be implemented in the following configurations.
(1) A working machine, comprising: a main body including at least one attachment portion, the main body being configured to travel based on rotational power from a travel motor, the attachment portion including a rotary body, the attachment portion being configured to switch between a first state and a second state by a predetermined operation, wherein: the first state is a state allowing the rotary body to rotate about a central axis thereof, and the second state is a state restricting the rotary body from rotating about the central axis thereof; and an operation unit connected to the main body via the attachment portion, the operation unit being configured to be gripped so as to assist the travel of the main body.
   According to this aspect, it becomes possible to switch between the first state and the second state depending on the working situation, thereby allowing operation using the operation unit. As a result, the operability of the working machine can be further improved.
(2) The working machine according to (1), wherein the attachment portion is positioned such that the central axis thereof is oriented along a vertical direction of the main body, thereby disposing the attachment portion substantially at a center of the main body in a horizontal surface orthogonal to the vertical direction.
   According to this aspect, it is possible to facilitate operation during an ultra-pivot turn.
(3) The working machine according to (1) or (2), wherein the second state is a state in which rotation of the rotary body is fixed with a predetermined play.
   According to this aspect, since rotation of the rotary body is allowed within a predetermined angular range, it becomes possible to reduce unnecessary input transmitted from the main body to the operation unit. For example, it becomes possible to mitigate input to the operation unit caused by meandering when the working machine runs on rough terrain. As a result, the operability in the second state can be further improved.
(4) The working machine according to (1) or (2), wherein the second state is a state in which the rotation of the rotary body is prevented.
   According to this aspect, since rotation of the rotary body is restricted, it is possible to operate the main body by the operation unit without delay. As a result, the operability in the second state can be further improved.
(5) The working machine according to any one of (1) to (4), wherein the attachment portion includes a switching portion configured to switch between the first state and the second state in response to a switching operation thereof.
   According to this aspect, switching between the first state and the second state can be easily performed by operating the switching portion.
(6) The working machine according to (5), wherein the switching portion is configured to switch between the first state and the second state in response to the switching operation via an electrical signal.
   According to this aspect, the switching operation of the switching portion can be performed more easily.
(7) The working machine according to any one of (1) to (6), wherein: the attachment portion further includes a hinge structure having a predetermined axis in a direction perpendicular to the central axis, and the attachment portion and the operation unit are connected to each other via the hinge structure and configured to rotate about the predetermined axis.
   According to this aspect, the hinge structure expands the movable range of the operation unit, thereby increasing the degree of freedom of the operation position of the working machine.
(8) The working machine according to (7), wherein the hinge structure is configured to switch between a third state and a fourth state, wherein: the third state is a state allowing the attachment portion and the operation unit to rotate about the predetermined axis, and the fourth state is a state restricting the attachment portion and the operation unit from rotating about the predetermined axis.
   According to this aspect, by selecting a fixed state of the operation unit suitable for the working situation, operability of the working machine can be further improved.
(9) The working machine according to (8), wherein the attachment portion further includes a hinge switching portion configured to switch between the third state and the fourth state in response to a switching operation thereof.
   According to this aspect, switching between the third state and the fourth state can be easily performed by operating the hinge switching portion.
(10) The working machine according to any one of (1) to (9), wherein the attachment portion is provided so as to be displaceable along a traveling direction of the main body.
   According to this aspect, by offsetting the attachment portion depending on the working situation, work can be performed in a state where operability is further improved.
(11). The working machine according to any one of (1) to (10), wherein the attachment portion is configured to removably connect the operation unit.
   According to this aspect, it becomes possible to attach or detach the operation unit depending on the working situation, thereby enabling work to be performed in a state in which operability is further improved..
(12) The working machine according to (11), wherein: at least one of the attachment portion(s) includes a plurality of the attachment portions, and the plurality of attachment portions are disposed spaced apart from each other along a traveling direction of the main body.
   According to this aspect, it becomes possible to select, depending on the working situation, which of the plurality of attachment portions the operation unit is to be connected to. As a result, work can be performed in a state where operability is further improved.
(13) The working machine according to any one of (1) to (12), wherein the working machine is a grass mower, a collection machine, or a spreader.
   According to this aspect, predetermined operations can be performed using a grass mower, a collection machine, or a spreader. with improved operability.

The configuration is not limited thereto.

As described above, various embodiments of the present invention have been explained, but these are presented by way of example and are not intended to limit the scope of the invention. The novel embodiments can also be implemented in various other forms, and various omissions, replacements, and modifications can be made without departing from the gist of the invention. Such embodiments and their modifications are included in the scope and spirit of the invention and are also encompassed within the scope of the invention set forth in the claims and equivalents thereof.

## Claims

1. A working machine, comprising:
a main body including at least one attachment portion, the main body being configured to travel based on rotational power from a travel motor, the attachment portion including a rotary body, the attachment portion being configured to switch between a first state and a second state by a predetermined operation, wherein:
the first state is a state allowing the rotary body to rotate about a central axis thereof, and
the second state is a state restricting the rotary body from rotating about the central axis thereof; and
an operation unit connected to the main body via the attachment portion, the operation unit being configured to be gripped so as to assist the travel of the main body.

2. The working machine according to claim 1, wherein
the attachment portion is positioned such that the central axis thereof is oriented along a vertical direction of the main body, thereby disposing the attachment portion substantially at a center of the main body in a horizontal surface orthogonal to the vertical direction.

3. The working machine according to claim 1 or 2, wherein
the second state is a state in which rotation of the rotary body is fixed with a predetermined play.

4. The working machine according to claim 1 or 2, wherein
the second state is a state in which the rotation of the rotary body is prevented.

5. The working machine according to any one of claims 1 to 4, wherein
the attachment portion includes a switching portion configured to switch between the first state and the second state in response to a switching operation thereof.

6. The working machine according to claim 5, wherein
the switching portion is configured to switch between the first state and the second state in response to the switching operation via an electrical signal.

7. The working machine according to any one of claims 1 to 6, wherein:
the attachment portion further includes a hinge structure having a predetermined axis in a direction perpendicular to the central axis, and the attachment portion and the operation unit are connected to each other via the hinge structure and are configured to rotate about the predetermined axis.

8. The working machine according to claim 7, wherein
the hinge structure is configured to switch between a third state and a fourth state, wherein:
the third state is a state allowing the attachment portion and the operation unit to rotate about the predetermined axis, and
the fourth state is a state restricting the attachment portion and the operation unit from rotating about the predetermined axis.

9. The working machine according to claim 8, wherein
the attachment portion further includes a hinge switching portion configured to switch between the third state and the fourth state in response to a switching operation thereof.

10. The working machine according to any one of claims 1 to 9, wherein
the attachment portion is provided so as to be displaceable along a traveling direction of the main body.

11. The working machine according to any one of claims 1 to 10, wherein
the attachment portion is configured to removably connect the operation unit.

12. The working machine according to claim 11, wherein:
at least one of the attachment portion(s) includes a plurality of the attachment portions, and
the plurality of attachment portions are disposed spaced apart from each other along a traveling direction of the main body.

13. The working machine according to any one of claims 1 to 12, wherein
the working machine is a grass mower, a collection machine, or a spreader.
